# EUROPÄISCHE PATENTSCHRIFT

(11) **EP 0 696 685 B1**
(45) Veröffentlichungstag und Bekanntmachung des Hinweises auf die Patenterteilung: **20.10.1999**
(21) Anmeldenummer: 95111871.0
(22) Anmeldetag: 27.07.1995
(51) Int. Cl.: F16B 21/02, F16B 21/16, F16B 12/20

(54) **Befestigungselement**
Fastening element
Elément de fixation

(30) Priorität: 09.08.1994 DE 4428213; 02.09.1994 DE 4431322
(43) Veröffentlichungstag der Anmeldung: 14.02.1996
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 0 011 913
- EP-A- 0 524 412
- DE-U- 9 200 911
- DE-U- 29 503 155
- US-A- 3 707 303

## Beschreibung

Die Erfindung betrifft ein Befestigungselement mit einer in einer Bohrung, beispielsweise einer Bohrung eines Möbelteils, befestigbaren dübelartigen Buchse, in deren axialen Bohrung ein eindrückbarer Haltestift gehaltert ist, der zwischen seinen verbreiteten, mit einem Schlitz oder Kreuzschlitz versehenen Kopf und der Buchse ein zu befestigendes Teil, vorzugsweise ein Beschlagteil, festlegt.

Derartig schnell und einfach von Hand oder nur mit einem einfachen Werkzeug montierbare Befestigungselemente sind in unterschiedlichen Ausführungsformen bekannt. Bei diesen ist der Haltestift entweder kraftschlüssig und/oder formschlüssig in der Dübelbuchse verankert. Bei bekannten Befestigungselementen, bei denen die Dübelbuchse kraftschlüssig in ihrer Bohrung gehalten wird, ist entweder eine große Kraft zur Spreizung der Buchse erforderlich oder aber nur eine geringe Festigkeit der Verbindung erreichbar. Bei bekannten Befestigungselementen, bei denen der Haltestift zusatzlich formschlüssig in der Dübelbuchse verankert wird, müssen bei häufig komplizierten Ausführungsformen geringe Fertigungstoleranzen eingehalten werden.

Aus der US-A-3,707, 303 ist ein auf dem Boden einer Sacklochbohrung abgestützter Stanzstempel zum Stanzen von Papierbahnen bekannt, der mit einer V-förmigen Ringnut versehen ist, in die als Rastglied eine durch eine Feder belastete Kugel greift, so daß der Stanzstempel an dem Herausfallen aus der Sacklochbohrung gehindert ist. Um nach einem Stumpfwerden des Stanzstempels diesen austauschen zu können, läßt sich dieser einfach gegen die Kraft der Rastkugel aus der Sacklochbohrung herausziehen und durch einen neuen in die Sacklochbohrung eingedrückten Stanzstempel ersetzen.

Aufgabe der Erfindung ist es, ein Befestigungselement der eingangs angegebenen Art zu schaffen, das bei gedrungener Bauweise eine mühelose und sichere Schnellmontage gestattet und sich einfach und schnell ohne Spezialwerkzeuge auch wieder lösen läßt.

Erfindungsgemäß wird diese Aufgabe bei einem Befestigungselement der gattungsgemäßen Art dadurch gelöst, daß der Schaft des Haltestifts mit mindestens einer im wesentlichen querverlaufenden Nut versehen ist, in die im eingedrückten Zustand des Haltestifts ein querverschieblich in der Buchse geführtes, federbelastetes Rastglied schnappt, das durch Drehen des Haltestifts in seine Entriegelungsstellung zurückgedrängt wird.

Das erfindungsgemäße Befestigungselement läßt sich also schnell und einfach nur dadurch montieren, daß der Haltestift in einer Stellung, in der seine Quernut dem Rastglied zugewandt ist, in das axiale Loch der Dübelbuchse eingedrückt wird, bis das Rastglied in die Quernut einschnappt. Durch einfaches Drehen des Haltestifts mit einem Schraubenzieher um etwa 80° läßt sich das Rastglied aus der Rastnut herausdrücken, so daß der Haltestift zum Lösen der Verbindung aus der Bohrung der Dübelbuchse herausgezogen werden kann.

Zweckmäßigerweise besteht das Rastglied aus einem Querstift, der in einer langlochartigen, im wesentlichen radialen Führung der Dübelbuchse geführt ist. Zweckmäßigerweise schneidet die Führung ein zur Bohrung hin offenes Sackloch, in dem eine Schraubendruckfeder gehaltert ist, die sich einerseits auf dem Boden des Sacklochs und andererseits auf dem Querstift abstützt.

Zweckmäßigerweise ist die Führung ausgehend von dem Bereich der Mittelachse der Bohrung der Dübelbuchse zum Ende der Buchse hin geneigt.

In weiterer Ausgestaltung der Erfindung ist vorgesehen, daß der Grund der Quernut des Haltestifts in seiner Öffnungsdrehrichtung abfallend gekrümmt ist. Durch diese Krümmung wird mit sich zunehmend vergrößerndem Hebelarm der Querstift aus der Quernut zurückgedrängt, so daß sich das Lösen der Verbindung mit verringertem Kraftaufwand bewirken läßt.

Zweckmäßigerweise besitzt die Quernut zu ihrem Ende mit dem gekrümmten Grund hin einen wendelförmigen schrägen Verlauf. Durch diese Ausgestaltung der Quernut wird der Haltestift bei seinem Drehen in seine Öffnungsstellung aus der Bohrung leicht herausgehoben, so daß er sich in seiner gelösten Stellung leichter aus der Bohrung der Dübelbuchse herausziehen läßt.

In weiterer Ausgestaltung der Erfindung ist vorgesehen, daß die axiale Bohrung exzentrisch zur Mittelachse der Dübelbuchse verläuft, der Schaft des Haltestifts entsprechend exzentrisch an dem als Versenkkopf ausgebildeten Kopf angesetzt ist und die Befestigungsbohrung des zu befestigenden Teils mit einem eingezogenen, zu dem kegelstumpfförmigen unteren Teil des Versenkkopfes komplementär geformten Rand versehen ist. Dabei sind die Exzentrizitäten des Schafts zu dem Kopf und der Bohrung der Dübelbuchse derart aufeinander abgestimmt, daß sich der Kopf nur dann in den eingezogenen Rand der Befestigungsbohrung eindrücken läßt, wenn sich der Haltestift in einer Stellung befindet, in der der Querstift in die Quernut einrasten kann. Wird nun der Kopf zum Zweck des Lösens gedreht, ist dieser in der durch den eingezogenen Rand der Befestigungsbohrung gebildeten Mulde nicht blokkiert, da die kegelstumpfförmigen Abschrägungen des Kopfes und des eingezogenen Randes derart auf den schrägen Verlauf der Quer' nut des Haltestifts abgestimmt sind, daß sich beim Herausdrehen des Stiftes aus der Verrastung der kegelstumpfförmige Mantel des Kopfes auf den komplementär geformten Rand im wesentlichen etwa abwälzt.

Zweckmäßigerweise besteht die in einer axialen Mittelebene geteilte Dübelbuchse aus zwei spiegelbildlichen Teilen, die durch eine Zapfen-Bohrungs-Verbindung zusammengefügt sind. Die beiden Teile werden zweckmäßigerweise aus Kunststoff-Spritzgußteilen hergestellt, so daß sich die gewünschten Konturen einschließlich des äußeren sägezahnartigen Profils exakt ausbilden lassen.

Die Quernut des Haltestifts ist zweckmäßigerweise zu ihrem Grund hin verengt, so daß vorhandene Fertigungstoleranzen ausgeglichen und der Haltestift in seiner eingerasteten Stellung spielfrei gehalten ist. Die Verengung kann dadurch bewirkt werden, daß die Seitenflanken der Nut zum Grund hin konvergieren, wobei die Nut in ihrem Öffnungsbereich breiter und in ihrem Grund schmaler als der Durchmesser des Raststifts ist.

Nach einer zweiten Ausführungsform der erfindungsgemäßen Rastverbindung ist vorgesehen, daß der Raststift drehbar, aber in axialer Richtung unverschieblich in einem diesen teilweise einfassenden Mantel angeordnet ist, der mit einem die Quernut des Raststifts freilegenden Ausschnitt und mit einem Anschlag versehen ist, mit dem er undrehbar an einem Gegenanschlag der Bohrung der Dübelbuchse gehalten ist. Bei dieser Ausgestaltung ist durch den Anschlag und den Gegenanschlag sichergestellt, daß sich der Raststift zu seiner Verrastung mit dem Rastglied bzw. dem Querstift nur in der richtigen Drehstellung in die Bohrung der Dübelbuchse eindrücken läßt, so daß die Bohrung der Dübelbuchse auch in deren Achse angeordnet werden kann.

Zweckmäßigerweise besteht der Anschlag aus einem an den Ausschnitt anschließenden, frei nach unten hin auslaufenden, in einer zur Stiftachse parallelen Ebene ausgeführten Schnitt des Mantels.

Der Gegenanschlag kann aus einer in der Bohrung der Dübelbuchse angeordneten sehnenartigen Stufe bestehen.

Zweckmäßigerweise ist der Querstift durch einen federnden Schenkel beaufschlagt, der von einem in einer Ringnut der Bohrung der Dübelbuchse gehalterten Ring abgebogen ist.

Der Mantel kann dadurch mit dem Haltestift drehbar aber axial unverschieblich verbunden sein, daß er auf der Innenseite seiner Durchgangsbohrung mit einer ringförmigen Wulst versehen ist, die in eine Ringnut des Haltestifts greift.

In weiterer Ausgestaltung der Erfindung ist vorgesehen, daß der Kopf des Stifts mit einem radialen Fortsatz versehen ist, dessen seitlichen stufenartigen Ränder Anschläge für einen Gegenanschlag des Mantels bilden. Dabei werden die Anschläge und Gegenanschläge einander derart zugeordnet, daß sich je nach den zusammenwirkenden Anschlägen der Stift entweder in einer Stellung befindet, in der er mit dem Rastglied in der Dübelbohrung verrasten kann oder sich in seiner entriegelten Stellung befindet.

Nach einer dritten Ausführungsform der Erfindung ist vorgesehen, daß der Schaft des Haltestifts mit einer Ringnut versehen ist, in die im eingedrückten Zustand des Haltestifts mindestens ein im wesentlichen querverschieblich in der Dübelbuchse geführtes federbelastetes Rastglied schnappt, daß der Schaft des Haltestifts oberhalb der Ringnut mit einem Gewinde versehen und mit diesem in eine mit einem Innengewinde versehene Buchse eingeschraubt ist, die gegenüber dem Rand der Bohrung des zu befestigenden Teils undrehbar gehalten ist. Auch bei diesem erfindungsgemäßen Befestigungselement läßt sich der Raststift nur durch einfaches Eindrücken in die Dübelbohrung einrasten. Der Raststift ist bereits an dem zu befestigenden Teil vormontiert, da sich der Rand der Befestigungsbohrung zwischen dem Kopf des Haltestifts und der auf diesen aufgeschraubten Gewindebuchse befindet. Zum Lösen der Rastverbindung wird der Stift aus der Gewindebuchse herausgeschraubt, so daß der Haltestift mit seiner Ringnut von dem Rastglied abgezogen wird.

Zweckmäßigerweise ist die Dübelbuchse mit zwei schräg nach außen zum Ende der Buchse hin verlaufenden Führungen versehen, wobei die Dübelbohrung aus einem Sackloch besteht und zwischen dem Grund des Sackloches und den beiden Querstiften eine Schraubendruckfeder eingespannt ist.

Die Gewindebuchse kann mit einem oberen abgesetzten Bund versehen sein, der sich auf eine entsprechende Ringstufe der Dübelbohrung beim Lösen bzw. Herausschrauben des Haltestifts aus der Gewindebuchse abstützt.

Die Gewindebuchse kann dadurch undrehbar gegenüber dem zu befestigenden Teil gehalten werden, daß sie an ihrem oberen Ende mit mindestens einem Fortsatz versehen ist, der in eine entsprechende Randausparung der Befestigungsbohrung des zu befestigenden Teils greift.

Ausführungsbeispiele der Erfindung werden nachstehend anhand der Zeichnung näher erläutert. In dieser zeigt
- Fig. 1: eine erste Ausführungsform eines Befestigungselements im auseinandergezogenen Zustand seiner Teile teilweise im Schnitt,
- Fig. 2: einen Längsschnitt durch das Befestigungselement nach Fig. 1 in seinem verrasteten Zustand,
- Fig. 3: einen Längsschnitt durch das Befestigungselement nach Fig. 1 im gelösten Zustand der Verrastung,
- Fig. 4 u. Fig. 5: Ansichten der Trennebenen der spiegelbildlichen Teile der Dübelbuchse des Befestigungselements nach Fig. 1,
- Fig. 6: einen Querschnitt durch den in Fig. 5 dargestellten Teil der Dübelbuchse längs der Linie 6-6,
- Fig. 7: eine perspektifische Ansicht des Haltestifts,
- Fig. 8: einen Schnitt durch den Haltestift längs der Linie 8-8 in Fig. 7,
- Fig. 9: einen Schnitt durch eine zweite Ausführungsform eines Befestigungselements im auseinandergezogenen Zustand seiner Einzelteile,
- Fig. 10: einen Schnitt durch das Befestigungselement nach Fig. 9 im verriegelten Zustand,
- Fig. 11: einen Schnitt durch das Befestigungselement nach Fig. 9 im entriegelten Zustand,
- Fig. 12: eine perspektifische Ansicht des aus seiner Ummantelung gelösten Haltestifts,
- Fig. 13: eine perspektifische Ansicht der Ummantelung des Haltestifts,
- Fig. 14 u. Fig. 15: Ansichten der beiden zu der Dübelbuchse zusammengefügten Teile in ihrer Trennebene,
- Fig. 16: einen Schnitt durch den Teil nach Fig. 15 längs der Linie 16-16,
- Fig. 17: einen Schnitt durch den Teil nach Fig. 15 längs der Linie 17-17,
- Fig. 18: eine perspektifische Ansicht des federnden Schenkels mit Haltering,
- Fig. 19: einen Schnitt durch eine dritte Ausführungsform eines Befestigungselements in auseinandergezogenen Zustände der rastbaren Teile,
- Fig. 20: einen Schnitt durch das Befestigungselement nach Fig. 19 im verrasteten Zustand,
- Fig. 21: einen Schnitt durch das Befestigungselement nach Fig. 19 während des Lösens der Rastverbindung,
- Fig. 22: eine Unteransicht auf die Befestigungsbohrung des zu befestigenden Teils,
- Fig. 23: eine perspektifische Ansicht der Gewindebuchse,
- Fig. 24: eine seitliche Ansicht des Haltestifts des Befestigungselements nach Fig. 19

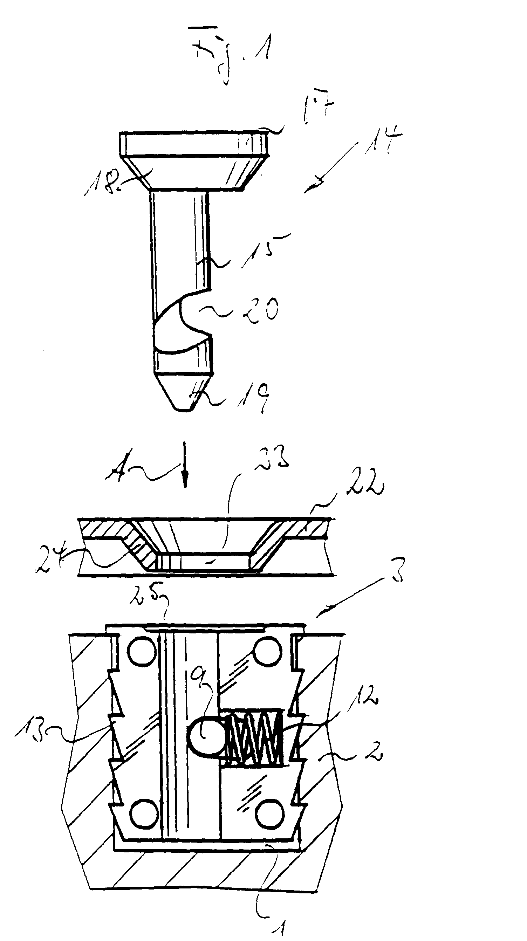

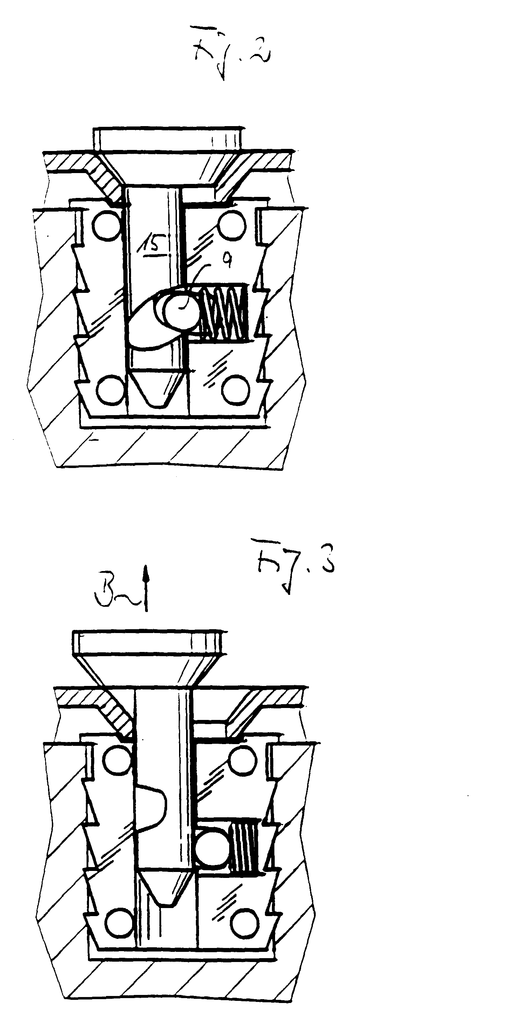

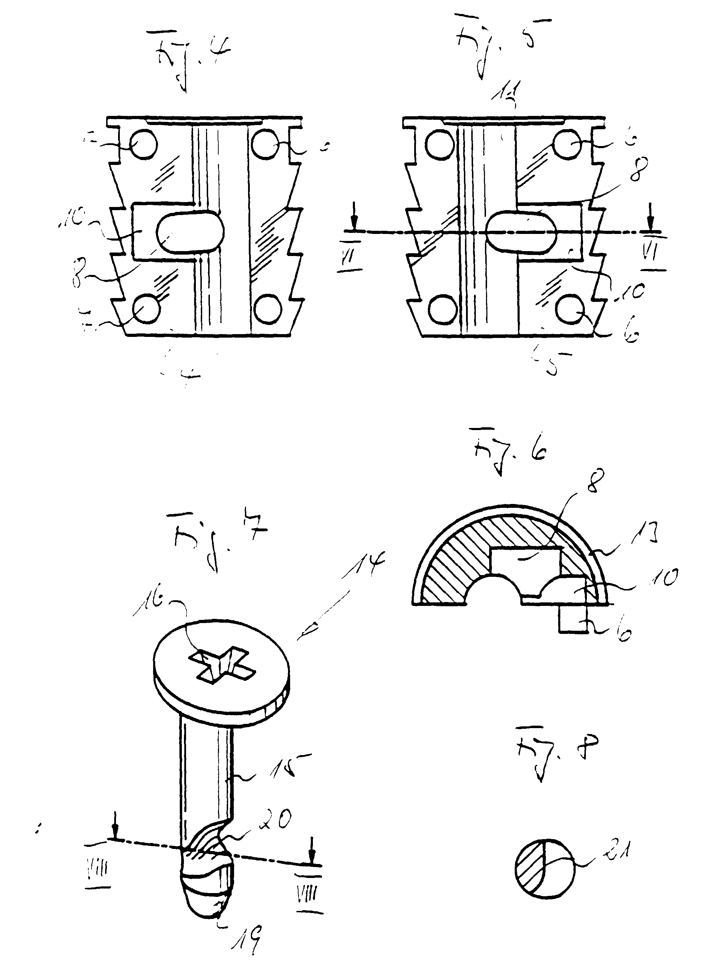

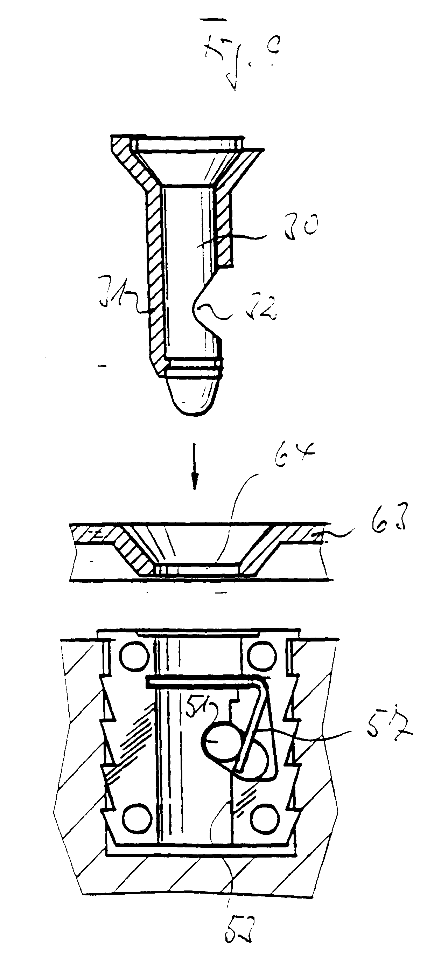

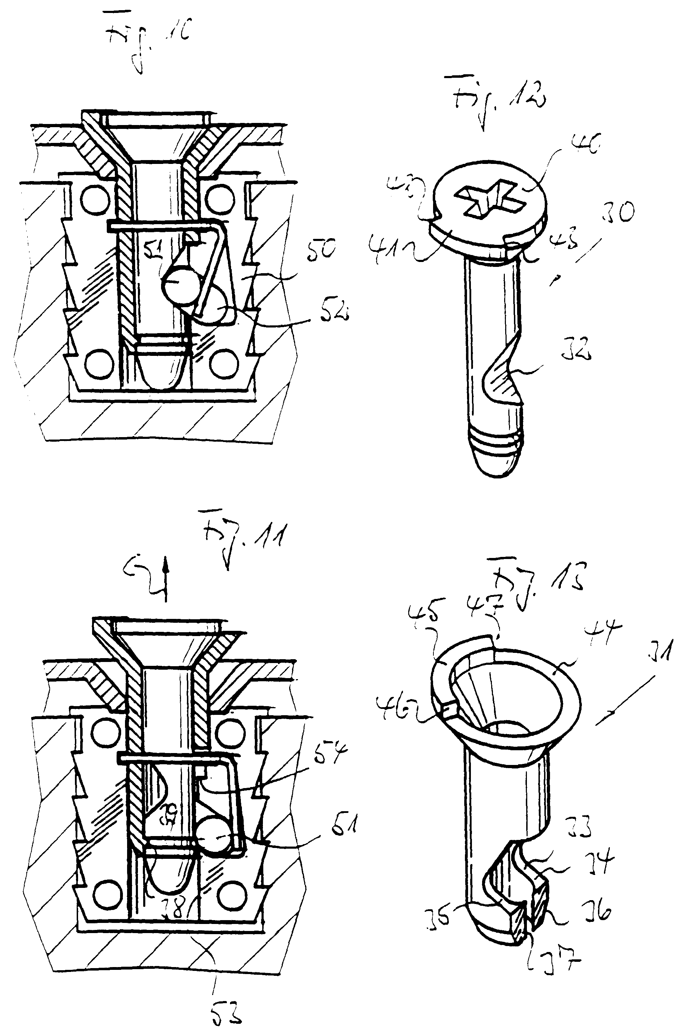

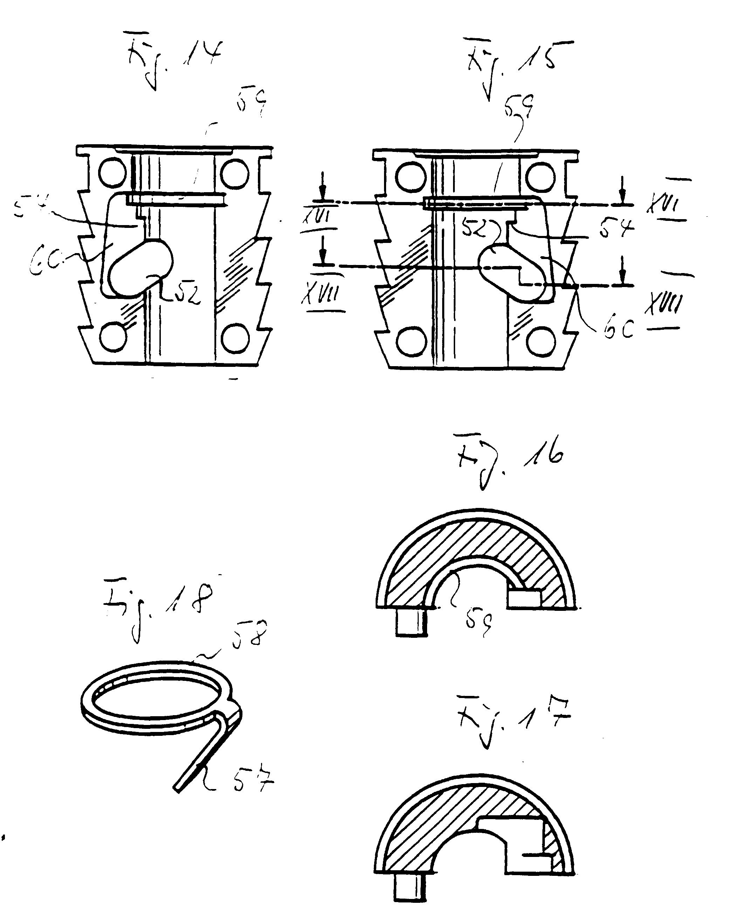

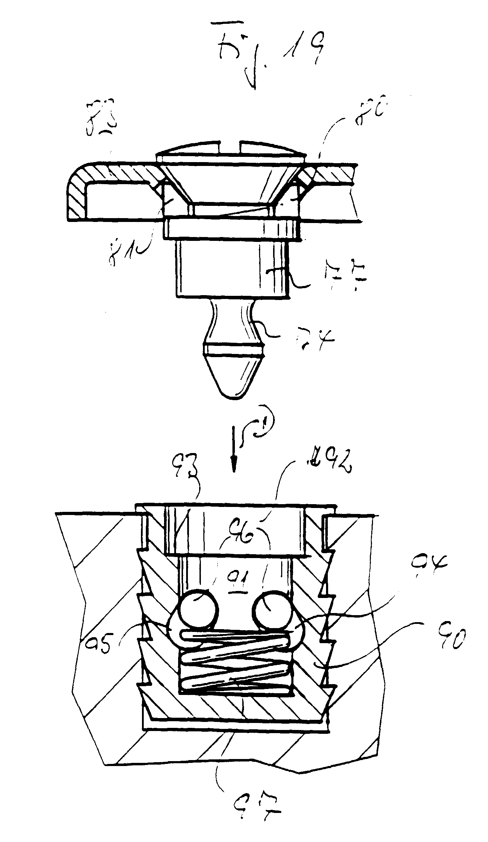

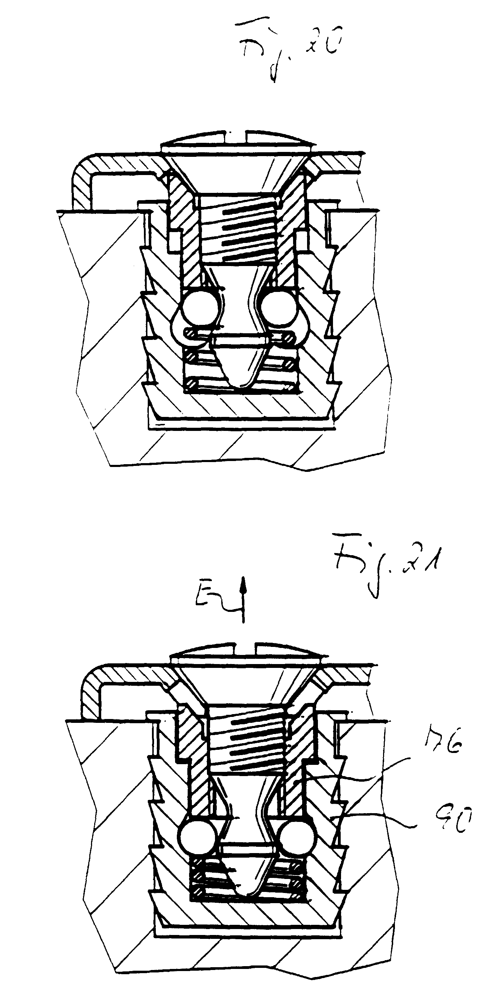

Die aus den Fig. 1 bis 8 ersichtliche Befestigungsvorrichtung besteht aus einer in einer Bohrung 1 eines Möbelteils 2 o. dgl. eingesetzten Dübelbuchse 3, die aus zwei spiegelbildlichen Hälften 4, 5 zusammengesetzt ist. Die die Dübelbuchse 3 in einer Längsmittelebene teilenden Hälften 4, 5 der Dübelbuchse bestehen aus Kunststoff-Spritzgußteilen. Jede Hälfte ist mit zwei Zapfen 6 und zwei Bohrungen 7 versehen, die dem Zusammenfügen und Zusammenhalten der Dübelbuchse dienen, nachdem in die Langlochführungen 8 der Querstift 9 und in das radiale Sackloch 10, das in die Dübelbohrung 11 mündet, die Druckfeder 12 eingesetzt worden ist, die sich mit einem Ende auf dem Grund des Sacklochs 10 und mit ihrem anderen Ende auf dem Querstift 9 abstützt. Die axiale Dübelbohrung ist exzentrisch zur Dübelachse angeordnet. Zu seiner guten Verankerung in der Bohrung 1 ist die Dübelbuchse 3 über ihren äußeren Umfang mit einem sägezahnartigen Profil 13 versehen.

Der Haltestift 14 besteht aus einem zylindrischen Schaftteil 15, der einen mit einem Kreuzschlitz 16 versehenen Kopf 17 trägt. Der Kopf 17 weist zwischen einem oberen scheibenförmigen Teil einen kegelstumpfförmigen Versenkteil 18 auf. An die untere kleinere Kreisfläche des kegelstumpfförmigen Teils 18 ist entsprechend der Exzentrizität der Dübelbohrung 11 der Schaft 15 angesetzt. Der Schaft 15 weist eine konusförmige Spitze 19 und oberhalb von dieser eine Quernut 20 auf, die zu der Spitze 19 hin schräg oder wendelförmig ausläuft. Zu ihrem Auslauf hin ist der Grund 21 der Nut leicht abwärts gekrümmt, wie dies aus Fig. 18 ersichtlich ist.

Das zu befestigende Teil 22 ist mit einer einwärts gebördelten Befestigungsbohrung 23 versehen, wobei der Bohrungsrand 24 entsprechend dem kegelstumpfförmigen Versenkkopf 17, 18 hohlkegelig abgeschrägt ist. Die Dübelbuchse 3 ist an ihrem oberen Ende mit einer flachen kreisrunden Ausnehmung 25 versehen, die der Zentrierung des unteren Randes der gebördelten Befestigungsbohrung dient.

Zum Schließen des Befestigungselements wird der Haltestift 14 in Richtung des Pfeils A durch die Befestigungsbohrung 23 hindurch in die Dübelbohrung 11 hineingedrückt, so daß der Querstift 9 in der aus Fig. 2 ersichtlichen Verriegelungsstellung in die Quernut 20 verrastend einschnappt. Aufgrund der Exzentrizität der Dübelbohrung 11 und des Schaftes 15 zu demm Haltestift 14 befindet sich bei dem Einsetzen des Haltestifts deren Quernut 20 auf dem dem Querstift 9 zugewandten Seite.

Zum Öffnen des Befestigungselements ist der Verriegelungsstift 14 mit einem Schraubenzieher im Gegenuhrzeigersinn zu drehen, so daß sich der Haltestift aufgrund der gewendelten Ausführung der Nut 20 aus der Dübelbohrung 11 herausdreht, wobei der Kopf des Haltestifts 15 nicht in der Einziehung der Befestigungsbohrung blockiert wird, weil der Mantel des kegelstumpfförmigen Teils 18 des Versenkkopfs aus der Wandung des Randes der Befestigungsbohrung sich abwälzt und gleichzeitig in Richtung des Pfeils B aus der Dübelbohrung heraustritt. Sobald sich der Querstift auf dem zylindrischen Mantel des Schafts 15 des Verriegelungsstifts 14 befindet, läßt sich dieser aus seiner in Fig. 3 ersichtlichen Stellung in Richtung des Pfeils B herausziehen.

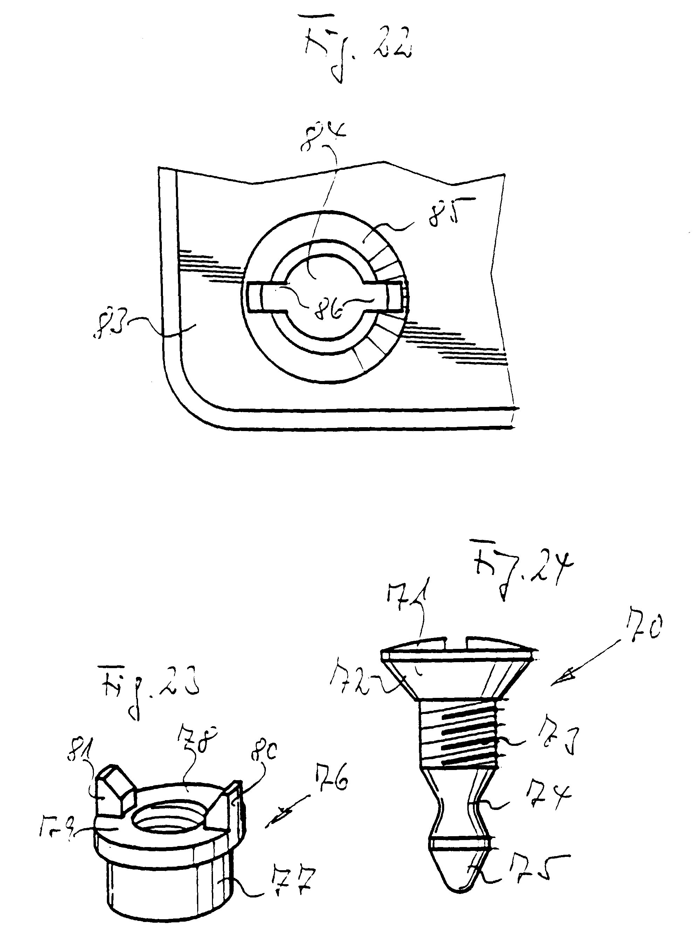

Das aus den Fig. 10 bis 17 ersichtliche zweite Ausführungsbeispiel des Befestigungselements unterscheidet sich von dem ersten im wesentlichen nur dadurch, daß der Raststift 30 drehbar aber in axialer Richtung unverschieblich in einem diese teilweise einfassenden Mantel 31 angeordnet ist. Der Mantel 31 besteht aus einem rohrförmigen Teil, dessen Innenkontur im wesentlilchen der Außenkontur des Haltestifts 30 angepaßt ist. Der Haltestift 30 ist mit einer Quernut 32 mit sich zu dem abgerundeten Grund hin verengenden Seitenflanken versehen. Diese Quernut verläuft quer zur Mittelachse des Haltestifts 30. Im Bereich der Quernut 32 ist der Mantel 31 mit einem diese freilegenden Ausschnitt 33 versehen. Der Mantel 31 ist in einer Ebene, die parallel zu der Ebene der Quermittellinie des Ausschnitts 33 verläuft, mit einem den Mantel schneidenden Freischnitt versehen, der von dem unteren Ende des Mantels her in der aus Fig. 13 ersichtlichen Weise in den Ausschnitt 33 einläuft, so daß sich zwei untere Schenkel 34, 35 ausbilden, deren Stirnseiten 36, 37 Anschlagflächen bilden. Der Mantel 13 ist in der aus Fig. 11 ersichtlichen Weise in seinem unteren Bereich mit einer nach innen ragenden Wulst 38 versehen, die in eine Ringnut 39 des Haltestifts 30 greift, so daß der Haltestift 30 mit dem Mantel 31 drehbar aber in axialer Richtung unverschieblich verbunden ist.

Der mit einem kegelstumpfförmigen Abschnitt versehene Versenkkopf 40 des Haltestifts 30 weist einen sektorartigen radialen Fortsatz 41 auf. Dieser Fortsatz 41 besitzt auf seinen beiden Seiten stufenartige Anschlagflächen 42, 43. Der Kopfbereich des Mantels ist in der aus Fig. 13 ersichtlichen Weise auf seiner ringförmigen Stirnfläche 44 mit einem axialen Fortsatz 45 versehen, der sich über den aus Fig. 13 ersichtlichen Umfangsbereich erstreckt. Auch dieser Fortsatz besitzt zwei stufenförmige Anschlagflächen 46, 47, die mit den Anschlagflächen 42, 43 des Haltestifts zusammenwirken. Liegen die Anschlagflächen einer Seite aneinander, befindet sich der Haltestift 30 in seiner, aus Fig. 10 ersichtlichen Verriegelungsstellung, während sich der Haltestift in seiner aus Fig. 11 ersichtlichen Öffnungsstellung befindet, wenn die beiden anderen Anschlagflächen aneinander liegen.

Die Dübelbuchse 50 ist auf ihrer Seite, auf der sich das den Querstift 51 aufnehmende Langloch 52 befindet, mit einer sehnenartigen Einziehung 53 versehen, die sich ausgehend von der Stufe 54 oberhalb des Langloches 52 bis zu dem unteren Ende der Dübelbohrung erstreckt. Diese eine ebene Anschlagfläche bildende Einziehung 53 bildet die Gegenanschläge für die durch den Freischnitt gebildeten Anschlagflächen 36, 37 des Mantels 31.

Aufgrund der Einziehung 53, die mit den Anschlagflächen 36, 37 zusammenwirkt, ist die Winkelstellung des Mantels 31 in der Dübelbohrung festgelegt, in der der Haltestift mit dem Querstift 51 verrasten kann. Die Verriegelungs- und Entriegelungsstellungen des Haltestifts 30 in dem Mantel 31 werden durch die Anschläge 42, 43 und 46, 47 bestimmt.

Der in der Schrägführung 52 befindliche Querstift 51 wird federnd von dem Schenkel 57 beaufschlagt, der von dem Haltering 58 in der aus Fig. 18 ersichtlichen Weise abgebogen ist. Der Haltering 58 ist in einer Ringnut 59 der Dübelbuchse 50 gehaltert.

Die Anordnung dieser Ringnut 59, der Schrägführung 52 und des Freischnitts 60 zur Bewegung des federnden Schenkels 57 in der Dübelbuchse sind aus deren spiegelbildlichen Hälften gemäß den Fig. 14 und 15 am besten ersichtlich.

Zum Montieren des Befestigungselements in der aus Fig. 9 ersichtlichen Weise ist der von dem Mantel 31 eingefaßte Haltestift durch die Befestigungsbohrung 64 des zu befestigenden Teils 63 hindurch in die Dübelbohrung der Dübelbuchse eingedrückt, und zwar in einer Lage, in der sich die Quernut 32 in dem Ausschnitt 33 des Mantels 31 befindet. Da der Mantel 31 nur in einer Winkelstellung zu der Dübelbohrung in diese eingedrückt werden kann, in der die Anschlagflächen 36, 37 auf der Einziehung 53 entlang: gleiten, ist sichergestellt, daß der Raststift 51 beim Eindrücken arretierend in die Rastnut 32 einfällt. Die verrastete Stellung ist aus Fig. 10 ersichtlich.

Zum Lösen der Rastverbindung wird der Raststift 30 mit einem Kreuzschlitzschraubenzieher um 180° in die aus Fig. 11 ersichtLiche Stellung gedreht, in der die entsprechenden Anschläge 42, 46 die Stellung des Raststifts 30 in dem Mantel 31 festlegen, so daß sich der Raststift zusammen mit seinem Mantel 31 in Richtung des Pfeils C in Fig. 11 aus der Dübelbohrung herausziehen läßt.

Bei dem Ausführungsbeispiel des Befestigungselements nach den Fig. 19 bis 24 ist der Raststift 70 unterhalb seines mit einem kegelstumpfförmigen Abschnitt versehenen Versenkkopfs 71 mit einem Schaft versehen, der einen oberen mit einem Gewinde 73 versehenen Teil einen an diesen anschließenden mit einer Ringnut 74 versehenen Teil und eine etwa konusförmige Spitze 75 besitzt. Der mit dem Gewinde 73 versehene Schaftteil ist in eine Gewindebuchse 76 eingeschraubt, die aus einem unteren zylindrischen Teil 77 und einer oberen ringbundförmigen oder flanschförmigen Verbreiterung 78 besteht, die auf ihrer Stirnfläche 79 um 180° versetzt zwei radiale Vorsprünge 80, 81 aufweist, deren Innenseiten entsprechend dem kegelstumpfförmigen Teil 72 des Versenkkopfs 71 abgeschrägt sind. Das zu befestigende Teil 83 ist mit einer Befestigungsbohrung 84 versehen, deren entsprechend dem kegelstumpfförmigen Abschnitt 72 des Kopfes 71 eingezogener Rand 85 mit zwei einander gegenüberliegenden Ausschnitten 86 versehen ist, in die die Vorsprünge 80, 81 in der aus Fig. 19 ersichtlichen Weise greifen.

Zur Vormontage der Befestigungsvorrichtung wird das mit dem Gewinde versehene Schaftteil 73 des Haltestifts 70 in die Gewindebuchse 76 unter Zwischenlage des zu befestigenden Teils 83 eingeschraubt, so daß das zu befestigende Teil 83 zwischen dem Kopf 71 und der Gewindebuchse 76 festgelegt ist.

Die Dübelbuchse 90 ist mit einer zentralen Sacklochbohrung versehen,die aus einem unteren längeren Abschnitt 91 mit kleinerem Durchmesser und einem oberen kürzeren Abschnitt 92 mit einem größeren Durchmesser versehen ist, so daß sich zwischen den beiden Abschnitten eine Ringstufe 93 ausbildet. Die Dübelbuchse ist mit zwei einander gegenüberliegenden schräg verlaufenden Langlöchern 94, 95 versehen, in denen Haltestift 96 geführt sind. Die Langlöcher 94, 95 verlaufen zum Ende der Dübelbuchse 90 hin schräg nach außen. Zwischen dem Grund des die Dübelbohrung bildenden Sacklochs 91 und den beiden Haltestiften 96 ist in der aus Fig. 19 ersichtlichen Weise eine Schraubendruckfeder 97 eingespannt, die die beiden Haltestifte 96 in Richtung auf ihre zusammengeschobene Stellung belastet.

Der an dem zu befestigenden Teil 83 in der aus Fig. 19 ersichtlichen Weise vormontierte Haltestift 70 wird zur Montage des Befestigungselements in Richtung des Pfeils D in die Dübelbohrung eingedrückt, bis die beiden Haltestifte 96 verrastend in die Ringnut 74 einfallen. Die verrastete Stellung ist aus Fig. 20 ersichtlich.

Zum Lösen der Rastverbindung wird der Haltestift 70 mit einem Kreuzschlitzschraubenzieher in der aus Fig. 21 ersichtlichen Weise entgegen dem Uhrzeigersinn gedreht, so daß die Gewindebuchse, ausgehend von der aus Fig. 20 ersichtlichen Verriegelungsstellung, in Richtung auf den Grund der Bohrung der Dübelbuchse 90 in die aus Fig. 21 ersichtliche Stellung nach unten wandert und dabei mit seiner unteren, ringförmigen Stirnfläche die beiden Haltestifte 96 in ihre Öffnungsstellung im Endbereich der beiden Langlöcher 94, 95 schiebt. In der aus Fig. 21 ersichtlichen Stellung ist im wesentlichen die Entriegelungsstellung erreicht, in der sich das zu befestigende Teil 83 zusammen mit dem Haltestift 70 und der Gewindebohrung 76 in Richtung des Pfeils E entfernen läßt.

## Patentansprüche

1. Befestigungselement mit einer in einer Bohrung, beispielsweise einer Bohrung eines Möbelteils befestigbaren dübelartigen Buchse, in deren axialen Bohrung ein eindrückbarer Haltestift gehaltert ist, der zwischen seinem verbreiterten, mit einem Schlitz oder Kreuzschlitz versehenen Kopf und der Dübelbuchse ein zu befestigendes Teil, vorzugsweise ein Beschlagteil festiegt,
**dadurch gekennzeichnet,**
daß der Schaft (15) des Haltestifts (14) mit mindestens einer im wesentlichen quer verlaufenden Nut (20) versehen ist, in die im eingedrücktem Zustand des Haltestifts (14) ein querverschieblich in der Dübelbuchse (3) geführtes, federbelastetes Rastglied (9) schnappt, das durch Drehen des Haltestifts (14) in seine Entriegelungsstellung (Fig. 3) zurückgedrängt wird.

2. Befestigungselement nach Anspruch 1, dadurch gekennzeichnet, daß das Rastglied aus einem Querstift (9) besteht, der in einer langlochartigen, im wesentlichen radialen Führung (8) der Dübelbuchse (3) geführt ist.

3. Befestigungselement nach Anspruch 2 oder 3, dadurch gekennzeichnet, daß die Führung (8) ein zur Dübelbohrung (11) hin offenes Sackloch (10) schneidet, in dem eine Schraubenfeder (12) gehaltert ist, die sich einerseits auf dem Boden des Sacklochs (10) und andererseits auf dem Querstift (9) abstützt.

4. Befestigungselement nach einem der Ansprüche 1 bis 3, dadurch gekennzeichent, daß die Führung (8) ausgehend von dem Bereich der Mittelachse der Dübelbohrung (11) zum Ende der Dübelbuchse (3) hin geneigt ist.

5. Befestigungselement nach einem der Ansprüche 1 bis 4, dadurch gekennzeichnet, daß der Grund (21) der Quernut (20) des Haltestifts (14) in seiner Öffnungsdrehrichtung abfallend gekrümmt ist.

6. Befestigungselement nach einem der Ansprüche 1 bis 5, dadurch gekennzeichnet, daß die Quernut (20) zu ihrem Ende mit dem gekrümmten Grund hin einen wendelförmigen, schrägen Verlauf besitzt.

7. Befestigungselement nach einem der Ansprüche 1 bis 6, dadurch gekennzeichnet, daß die axiale Dübelbohrung (11) exzentrisch zur Mittelachse der Dübelbuchse (3) verläuft, der Schaft (15) des Haltestifts (14) entsprechend exzentrisch an dem als Versenkkopf ausgebildeten Kopf (17, 18) angesetzt ist und die Befestigungsbohrung (23) des zu befestigenden Teils (22) mit einem eingezogenen, zu dem kegelstumpfförmigen hinteren Teil (18) des Versenkkopfes komplementär geformten Rand (24) versehen ist.

8. Befestigungselement nach einem der Ansprüche 1 bis 7, dadurch gekennzeichnet, daß die in einer axialen Mittelebene geteilte Dübelbuchse (3) aus zwei spiegelbildlichen Teilen (4, 5) besteht, die durch eine Zapfen-Bohrungs-Verbindung (6, 7) zusammengefügt sind.

9. Befestigungselement nach einem der Ansprüche 1 bis 8, dadurch gekennzeichnet, daß die Quernut (20) sich zu ihrem Grund hin verengt.

10. Befestigungselement nach Anspruch 1 oder 2, dadurch gekennzeichnet, daß der Haltestift (30) drehbar, aber in axialer Richtung unverschieblich in einem diesen teilweise einfassenden Mantel (31) angeordnet ist, der mit einem die Quernut (32) des Haltestifts (30) freilegenden Ausschnitt (33) und einem Anschlag (36, 37) versehen ist, mit dem er undrehbar an einem Gegenanschlag (53) der Bohrung der Dübelbuchse (50) gehalten ist.

11. Befestigungselement nach Anspruch 10, dadurch gekennzeichnet, daß der Anschlag (36, 37) aus einem an den Ausschnitt (33) anschließenden, frei nach unten hin auslaufenden, in einer zur Stiftachse parallelen Ebene ausgeführten Schnitt des Mantels (31) besteht.

12. Befestigungselement nach Anspruch 10 oder 11, dadurch gekennzeichnet, daß der Gegenanschlag aus einer in der Bohrung der Dübelbuchse (50) angeordneten sehnenartigen Stufe (53, 54) besteht.

13. Befestigungselement nach einem der Ansprüche 10 bis 12, dadurch gekennzeichnet, daß der Querstift (51) durch einen federnden Schenkel (57) beaufschlagt ist, der von einem in einer Ringnut (59) der Bohrung der Dübelbuchse (50) gehalterten Ring (58) abgebogen ist.

14. Befestigungselement nach einem der Ansprüche 10 bis 13, dadurch gekennzeichnet, daß der Mantel (31) mit einer auf der Innenseite seiner Durchgangsbohrung befindlichen ringförmigen Wulst (38) in eine Ringnut (39) des Haltestifts (30) greift.

15. Befestigungselement nach einem der Ansprüche 10 bis 14, dadurch gekennzeichnet, daß der Kopf (40) des Stifts (30) mit einem radialen Fortsatz (41) versehen ist, dessen seitlichen stufenförmigen Ränder (42, 43) Anschläge für einen Gegenanschlag (46, 47) des Mantels (31) bilden.

16. Befestigungselement nach dem Oberbegriff des Patentanspruchs 1, bei dem der Schaft des Haltestifts (70) mit einer Ringnut (74) versehen ist, in die in eingedrücktem Zustand des Haltestifts (70) mindestens ein im wesentlichen querverschieblich in der Dübelbuchse (90) geführtes, federbelastetes Rastglied (96) schnappt,
**dadurch gekennzeichnet,**
daß der Schaft des Haltestifts (70) oberhalb der Ringnut (74) mit einem Gewinde versehen und mit diesem in eine in einem Innengewinde versehene Gewindebuchse (76) eingeschraubt ist, die gegenüber dem Rand (85) der Bohrung (84) des zu befestigenden Teils (83) undrehbar gehalten ist, so daß durch verdrehen des Haltestifts (70) das Rastglied (96) in seine Entriegelungsstellung verschoben wird.

17. Befestigungsvorrichtung nach Anspruch 16, dadurch gekennzeichnet, daß die dübelartige Buchse (90) mit zwei schräg nach außen zum Ende der Dübelbuchse (90) hin verlaufenden Führungen (94, 95) versehen ist, die Dübelbohrung (91, 92) aus einem Sackloch besteht und zwischen dem Grund des Sacklochs mit den beiden Querstiften (96) eine Schraubendruckfeder (97) eingespannt ist.

18. Befestigungselement nach Anspruch 16 oder 17, dadurch gekennzeichnet, daß die Gewindebuchse (76) mit einem oberen abgesezten Bund (78) zu sehen ist.

19. Befestigungselement nach Anspruch 18, dadurch gekennzeichnet, daß die Dübelbohrung mit entsprechend abgestuften Bohrungsabschnitten (91, 92) versehen ist.

20. Befestigungselement nach einem der Ansprüche 16 bis 19, dadurch gekennzeichnet, daß die Gewindebuchse (76) an ihrem oberen Ende mit mindestens einem Fortsatz (80, 81) versehen ist, der in eine entsprechende Randaussparung (86) der Befestigungsbohrung (84) des zu befestigenden Teils (83) greift.

## Claims

1. Fastening element with a dowel-like bushing located in a hole, for example in a hole of a furniture part, in the axial bore of which bushing is mounted an insertable retaining pin which secures between its widened head, provided with a slot or cross slot, and the dowel bushing, a part requiring fastening, preferably a furniture fitting,
**characterised in that**
the stem (15) of the retaining pin (14) is provided with at least one groove (20) running essentially in a transverse direction, in which groove (20) in the inserted condition of the retaining pin (14) a transversely sliding spring-loaded latching element (9) engages which is guided in the dowel bushing (3), which latching element (9) is forced back into its unlocking position (Fig. 3) by rotating said retaining pin (14).

2. Fastening element according to Claim 1, characterised in that the latching element consists of a transverse pin (9) which is located in an oblong hole-like, essentially radial guide (8) of the dowel bushing (3).

3. Fastening element according to Claim 2 or 3, characterised in that the guide (8) intersects a blind hole (10) which is open towards the dowel bore (11), in which blind hole (10) is mounted a helical spring (12), one end of which rests on the floor of the blind hole (10) and the under end of which rests on the transverse pin (9).

4. Fastening element according to one of Claims 1 to 3, characterised in that the guide (8) is inclined from the area of the centreline of the dowel bore (11) towards the end of the dowel bushing (3).

5. Fastening element according to one of Claims 1 to 4, characterised in that the root (21) of the transverse groove (20) of the retaining pin (14) is downwardly curved in its opening direction of rotation.

6. Fastening element according to one of Claims 1 to 5, characterised in that the transverse groove (20) features towards its end with the curved root a spiral, diagonal shape.

7. Fastening element according to one of Claims 1 to 6, characterised in that the axial dowel bore (11) runs eccentrically to the centreline of the dowel bushing (3), the stem (15) of the retaining pin (14) is correspondingly offset eccentrically at the head (17, 18), which is designed as a countersunk head, and the fastening hole (23) of the part being fastened (22) is provided with a rim (24) of complementarily tapered design matching the truncated cone shape of the rear portion (18) of said countersunk head.

8. Fastening element according to one of Claims 1 to 7, characterised in that the dowel bushing (3), which is split in an axial centreline plane, consists of two parts (4, 5) of mirrored design which are joined together by means of a maleto-female connection (6, 7).

9. Fastening element according to one of Claims 1 to 8, characterised in that the transverse groove (20) tapers in towards its root.

10. Fastening element according to Claim 1 or 2, characterised in that the retaining pin (30) is rotationally mounted yet axially fixed in a case (31) which partially encloses it, which case (31) is provided with a cut-out (33) revealing the transverse groove (32) of the retaining pin (30), and with a mechanical stop (36, 37) with which it is retained at a counter-stop (53) in the bore of the dowel bushing (50) to prevent it from rotating.

11. Fastening element according to Claim 10, characterised in that the mechanical stop (36, 37) consists of a cut in the case (31) adjoining the cut-out (33) and running out freely downwards, executed in a plane parallel to the pin axis.

12. Fastening element according to Claim 10 or 11, characterised in that the counter-stop consists of a chord-like step (53, 54) arranged in the bore of the dowel bushing (50).

13. Fastening element according to one of Claims 10 to 12, characterised in that the transverse pin (51) is pressured by a spring-loaded arm (57) which is bent down from a ring (58) held in an annular groove (59) of the bore of the dowel bushing (50).

14. Fastening element according to one of Claims 10 to 13, characterised in that the case (31) engages with an annular bead (38) located on the inside of its through-bore in an annular groove (39) of the retaining pin (30).

15. Fastening element according to one of Claims 10 to 14, characterised in that the head (40) of the pin (30) is provided with a radial extension (41), the lateral step-shaped edges (42, 43) of which form stops for a counter-stop (46, 47) of the case (31).

16. Fastening element according to the classifying part of Claim 1, in which the stem of the retaining pin (70) is provided with an annular groove (74) into which in the inserted condition of the retaining pin (70) engages at least one essentially laterally sliding spring-loaded latching element (96) located in the dowel bushing (90),
**characterised in that**
the stem of said retaining pin (70) is provided above the annular groove (74) with a thread, and is screwed with this into an internally threaded bushing (76) is held against the edge (85) of the fastening hole (84) of the part being fastened (83) to prevent rotation, so that by rotating the retaining pin (70), the latching element (96) is pushed into its unlocking position.

17. Fastening element according to Claim 16, characterised in that the dowel-like bushing (90) is provided with two guides (94, 95) running diagonally outwards to the end of the dowel bushing (90), the dowel bore (91, 92) consists of a blind hole, and between the floor of the blind hole and the two transverse pins (96) is clamped a helical compression spring (97).

18. Fastening element according to Claim 16 or 17, characterised in that the threaded bushing (76) is provided with a shouldered top collar (78).

19. Fastening element according to Claim 18, characterised in that the dowel bore is provided with correspondingly stepped bore sections (91, 92).

20. Fastening element according to one of Claims 16 to 19, characterised in that the threaded bushing (76) is provided at its top end with at least one extension (80, 81) which engages in a corresponding rim recess (86) of the fastening hole (84) of the part (83) to be fastened.

## Revendications

1. Elément de fixation présentant une douille à la manière d'une cheville pouvant être fixée dans un alésage, par exemple un alésage d'une partie de meuble, dans l'alésage axial de laquelle une goupille de maintien enfonçable est maintenue qui fixe entre sa tête élargie pourvue d'une fente ou d'une fente en croix et la douille-cheville une pièce à fixer, de préférence une pièce de ferrure, caractérisé en ce que la tige (15) de la goupille de maintien (14) présente au moins une rainure s'étendant substantiellement transversalement, dans laquelle, dans l'état enfoncé de la goupille de maintien (14), s'encliquette un élément d'encliquetage (9) à ressort, guidé de manière à pouvoir se déplacer transversalement dans la douille-cheville (3), lequel élément d'encliquetage (9) est refoulé dans sa position de déverrouillage (figure 3) lorsque la goupille de maintien (14) est tournée.

2. Elément de fixation selon la revendication 1, caractérisé en ce que l'élément d'encliquetage consiste en une pointe transversale (9) qui est guidée dans un guidage substantiellement radial (8) à la manière d'un trou oblong de la douille-cheville (3).

3. Elément de fixation selon les revendications 2 ou 3, caractérisé en ce que le guidage (8) entrecroise un trou borgne (10) ouvert en direction de l'alésage de la cheville (11), dans lequel un ressort hélicoïdal (12) est maintenu qui s'appuie d'une part sur le fond du trou borgne (10) et d'autre part sur la pointe transversale (9).

4. Elément de fixation selon l'une quelconque des revendications 1 à 3, caractérisé en ce que le guidage (8) partant de la zone de l'axe médian de l'alésage de la cheville (11) est incliné vers l'extrémité de la douille-cheville (3).

5. Elément de fixation selon l'une quelconque des revendications 1 à 4, caractérisé en ce que le fond (21) de la rainure transversale (20) de la goupille de maintien (14) est courbé vers le bas en sa direction de pivotement ouvrante.

6. Elément de fixation selon l'une quelconque des revendications 1 à 5, caractérisé en ce que la rainure transversale (20) possède une forme oblique en colimaçon en direction de son extrémité avec le fond courbé.

7. Elément de fixation selon l'une quelconque des revendications 1 à 6, caractérisé en ce que l'alésage de cheville axial (11) s'étend de manière excentrique par rapport à l'axe médian de la douille-cheville (3), la tige (15) de la goupille de maintien (14) étant décalée en correspondance excentriquement à la tête (17, 18) formée comme tête noyée, et l'alésage de fixation (23) de la partie à fixer (22) est pourvu d'un bord (24) formé de manière complémentaire à la partie tronconique (18) arrière de la tête noyée.

8. Elément de fixation selon l'une quelconque des revendications 1 à 7, caractérisé en ce que la douille-cheville (3) fendue dans un plan médian axial consiste en deux parties inversées (4, 5) qui sont jointes par un raccord mâle/femelle (6, 7).

9. Elément de fixation selon l'une quelconque des revendications 1 à 8, caractérisé en ce que la rainure transversale (20) se rétrécit en direction de son fond.

10. Elément de fixation selon les revendications 1 ou 2, caractérisé en ce que la goupille de maintien (30) peut être tournée, mais est disposée de manière à ne pas pouvoir être déplacée en direction axiale dans un corps cylindrique (31) qui l'entoure partiellement, corps cylindrique présentant une découpe (33) dégageant la rainure transversale (32) de la goupille de maintien (30) et une butée (36, 37) moyennant laquelle elle est maintenue, de manière à ne pas pouvoir tourner, à une contrebutée (53) de l'alésage de la douille-cheville (50).

11. Elément de fixation selon la revendication 10, caractérisé en ce que la butée (36, 37) coniste en une coupure adjacente à la découpe (33) s'étendant librement vers le bas dans un plan parallèle à l'axe de la goupille.

12. Elément de fixation selon la revendication 10 ou 11, caractérisé en ce que la contrebutée consiste en un gradin (53, 54) à la manière d'une corde disposé dans l'alésage de la douille-cheville (50).

13. Elément de fixation selon l'une quelconque des revendications 10 à 12, caractérisé en ce que la pointe transversale (51) est pressée par une branche élastique (57) qui est courbée à partir d'un anneau (58) maintenu dans une rainure annulaire (59) de l'alésage de la douille-cheville (50).

14. Elément de fixation selon l'une quelconque des revendications 10 à 13, caractérisé en ce que le corps cylindrique (31) s'engage par un bourrelet annulaire (38) se trouvant sur le côté intérieur de son alésage traversant dans une rainure annulaire (39) de la goupille de maintien (30).

15. Elément de fixation selon l'une quelconque des revendications 10 à 14, caractérisé en ce que la tête (40) de la goupille (30) est pourvue d'une projection radiale (41) dont les bords latéraux en forme de gradin (42, 43) forment des butées pour une contrebutée (46, 47) du corps cylindrique (31).

16. Elément de fixation selon le préambule de la revendication 1, dans lequel la tige de la goupille de maintien (70) est pourvue d'une rainure annulaire (74) dans laquelle s'encliquette au moins un élément d'encliquetage (96) à ressort guidé dans la douille-cheville (90) pouvant se déplacer substantiellement en direction transversale lorsque la goupille de maintien (70) est dans l'état enfoncé, caractérisé en ce que la tige de la goupille de maintien (70) est pourvue au dessus de la rainure annulaire (74) d'un filet et est vissée avec celui-ci dans une douille filetée (76) pourvue d'un filet intérieur, qui est maintenue de manière à ne pas pouvoir tourner par rapport au bord (85) de l'alésage (84) de la pièce à fixer (3) de sorte que par le pivotement de la goupille de maintien (70) l'élément d'encliquetage (96) est déplacé dans sa position de déverrouillage.

17. Elément de fixation selon la revendication 16, caractérisé en ce que la douille à la manière d'une cheville (90) est pourvue de deux guidages (94, 95) s'étendant obliquement vers l'extérieur vers l'extrémité de la douille-cheville (90), que l'alésage de la cheville (91, 92) consiste en un trou borgne et qu'entre le fond du trou borgne et les deux pointes transversales (96) un ressort de compression hélicoïdal est serré.

18. Elément de fixation selon les revendications 16 ou 17, caractérisé en ce que la douille filetée (76) est pourvue en haut d'une collerette à épaulement (78).

19. Elément de fixation selon la revendication 18, caractérisé en ce que l'alésage de cheville est pourvu de sections d'alésage (91, 92) à gradin correspondant.

20. Elément de fixation selon l'une quelconque des revendications 16 à 19, caractérisé en ce que la douille filetée (76) est pourvue en son extrémité supérieure d'au moins une projection (80, 81) qui s'engage dans une échancrure de bord correspondante (86) de l'alésage de fixation (84) de la pièce à fixer (83).
